Europäisches Patentamt

European Patent Office

Office européen des brevets

(11) Veröffentlichungsnummer: **0 429 901 A1**

## (12) EUROPÄISCHE PATENTANMELDUNG

(21) Anmeldenummer: 90121257.1

(22) Anmeldetag: 07.11.90

(51) Int. Cl.⁵: **B25J 15/00, B25J 19/00**

(30) Priorität: 29.11.89 DE 3939349

(43) Veröffentlichungstag der Anmeldung:
05.06.91 Patentblatt 91/23

(84) Benannte Vertragsstaaten:
**DE ES FR GB IT Patentblatt 02/A**

(71) Anmelder: **Fried. Krupp Gesellschaft mit beschränkter Haftung**
**Altendorfer Strasse 103**
**W-4300 Essen 1(DE)**

(72) Erfinder: **Becker, Hans Joachim, Dipl.-Ing.**
**Erikapfad 8**
**W-4300 Essen 1(DE)**
Erfinder: **Sondermann, Willi**
**Liesenfeldstrasse 10A**
**W-4250 Bottrop(DE)**

(54) **Einrichtung zur Handhabung insbesondere von Gegenständen aus nachgiebigen Werkstoffen.**

(57) Bei der Handhabung von Gegenständen aus nachgiebigen Werkstoffen mittels Halteorganen tritt häufig das Problem auf, daß die Gegenstände zwischen Auflagen mit unterschiedlich geformten Oberflächen transportiert, also beispielsweise von einer ebenen Oberfläche aufgenommen und auf eine konvex bzw. konkav gekrümmte Oberfläche abgelegt werden müssen. Dies geschieht durch Einsatz von Greifern, die an einer formveränderlichen Halterung mittels eines Tragelements bewegbar sind, wobei die Halterung wechselweise in einem Entspannungs-zustand mit niedrigem Formänderungswiderstand und in einen Verspannungszustand versetzbar ist, in den sie - bedingt durch eine Blockierung ihrer Bestandteile - formbeständig ist.

Mit der Erfindung wird der Vorschlag unterbreitet, die Halterung (2) aus beweglich miteinander in Verbindung stehenden Stabelementen (3) aufzubauen, die über an ihnen angreifende Spannelemente (4) gegeneinander feststellbar und zumindest linienhaft angeordnet sind.

## FIG.2a

## EINRICHTUNG ZUR HANDHABUNG INSBESONDERE VON GEGENSTÄNDEN AUS NACHGIEBIGEN WERK-STOFFEN

Die Erfindung betrifft eine Einrichtung zur Handhabung insbesondere von Gegenständen aus nachgiebigen Werkstoffen, mit Halteorganen, insbesondere Greifern, die an einer formveränderlichen Halterung mittels eines Tragelements bewegbar sind, wobei die Halterung wechselweise in einen Entspannungszustand mit niedrigem Formänderungswiderstand und in einen Verspannungszustand versetzbar ist, in dem sie - bedingt durch eine Blockierung ihrer Bestandteile - formbeständig ist.

Das Halteorgan kann als Greifer, insbesondere als Zangen-, Nadel-, Magnet- oder Vakuumgreifer, ausgebildet sein. Allgemein ist in dem hier angesprochenen Zusammenhang unter Halteorgan jede Einheit zu verstehen, mittels welcher ein Gegenstand festhaltbar, mitführbar und wieder freisetzbar ist. Als Tragelement kann beispielsweise ein Roboter mit zumindest einem Betätigungsarm zur Anwendung kommen, an dem die Halteorgane über eine Halterung (Adapter) befestigt sind.

Häufig wird an Handhabungseinrichtungen die Anforderung gestellt, Gegenstände von einer ebenen Auflage aufzunehmen und gezielt, d.h. mit ausreichender Genauigkeit, auf einer andersgeformten Oberfläche - beispielsweise einer gewölbten Oberfläche - abzulegen.

Die gewölbte oder beliebig geformte Oberfläche kann beispielsweise Bestandteil einer Kleiderpuppe sein, auf der vorgeschnittene Stoff- oder Lederstücke zur Auflage gebracht werden müssen. Die Oberfläche kann jedoch auch einem Werkzeug angehören, in welches von einem ebenen Zuschneidetisch aufgenommene, flächenartige Faserverstärkungen (wie Fasermatten, -gewebe oder -gelege) eingelegt werden müssen.

Zur Handhabung insbesondere von Gegenständen aus nachgiebigen Werkstoffen ist bereits die Verwendung einer Halterung mit einem verformbaren Kissen vorgeschlagen worden, an dem die Halteorgane beweglich angebracht sind und welches durch Veränderung einer physikalischen Größe (beispielsweise Temperatur oder Druck) über seine zunächst fließfähige Füllung in einen ausgesteiften Zustand überführbar ist. Im Entspannungszustand ist das Kissen biegeschlaff und kann sich daher der Form einer vorgegebenen Oberfläche anpassen, solange eine bestimmte physikalische Größe nicht verändert wird. Die Kissen-Füllung kann beispielsweise aus einer Flüssigkeit bestehen, die durch eine Temperaturänderung in den festen Zustand überführbar ist. Als geeignete Flüssigkeiten, die durch eine Kühlung der Kissen-Füllung bzw. des Kissens einen festen Zustand annehmen, kommen beispielsweise Triglyceride in Betracht.

Bei einer andersartigen Ausführungsform besteht die Füllung aus einer Vielzahl Festkörper, die unter der Wirkung eines im Kissen erzeugten Unterdrucks gegeneinander gepreßt werden und dadurch einer Formänderung widerstehen. Die normalerweise kugelförmig ausgebildeten Festkörper können dabei aus Styropor oder einem Werkstoff mit vergleichbaren Eigenschaften bestehen.

Aus der Zeitschrift "Robotersysteme" 5 (1989), Seiten 97 bis 104, ist eine Halterung in Form eines Matrix-Magnetgreifersbekannt, die eine größere Anzahl gegeneinander beweglicher, jeweils mit einem Elektromagneten ausgestatteter Tragbolzen aufweist. Diese sind in Längsrichtung verschiebbar und über Klemmelemente festhaltbar in einem Rahmen gehalten. Die bekannte Handhabungseinrichtung dient allerdings dazu, gleichzeitig mehrere ferromagnetische Werkstücke zu erfassen, aufzunehmen und zu vereinzeln.

Der Erfindung liegt die Aufgabe zugrunde, eine andersartig ausgebildete Einrichtung zur Handhabung insbesondere von Gegenständen aus nachgiebigen Werkstoffen zu entwickeln, die es bei vertretbarem technischem Aufwand gestattet, die Halterung - und damit die Lage der zugehörigen Halteorgane - hinsichtlich ihrer geometrischen Gestalt dem Verlauf beispielsweise einer Aufnahme- und/oder Ablegeoberfläche anzupassen.

Die gestellte Aufgabe wird durch eine Handhabungseinrichtung mit den Merkmalen des Anspruchs 1 gelöst.

Der der Erfindung zugrundeliegende Lösungsgedanke besteht darin, die Halterung mit beweglich miteinander in Verbindung stehenden Stabelementen auszustatten, die über an ihnen angreifende Spannelemente gegeneinander feststellbar und zumindest linienhaft angeordnet sind. Eine mögliche Ausführungsform des Erfindungsgegenstandes ist also dadurch gekennzeichnet, daß die Stabelemente - unter Zwischenschaltung der an ihnen angreifenden Spannelemente - miteinander eine Linie bilden; eine derartige Halterung ermöglicht es dementsprechend, beliebig geformte schmale - d.h. streifenförmige - Gegenstände aufzunehmen und auf eine gleichartig oder andersartig geformte Oberfläche abzulegen. Für die Handhabung mehr flächenhaft ausgestalteter Gegenstände sind die Stabelemente und die diese miteinander verbindenden Spannelemente nach Art eines Gitterwerks angeordnet, d.h. es liegen nicht nur mehrere Stabelemente nebeneinander, sondern gleichzeitig auch hintereinander.

Bedingt durch die Verwendung der im Entspannungszustand beweglich miteinander verbundenen Stabelemente kann die Halterung beispielsweise unter Einwirkung ihres Eigengewichts und/oder durch Abstützen der Halteorgane an einer Oberfläche verformt und durch Blockieren der Spannelemente in der zuvor angenommenen Form festgehalten, d.h. formbeständig gemacht werden.

Vorzugsweise sind die Stabelemente mit den zugehörigen Spannelementen in der Weise ausgerichtet, daß sie in einer - wenn auch gegebenenfalls beliebig geformten - Ebene liegen, von welcher die Halteorgane ausgehen.

Stabelemente im Sinne der Erfindung sind in sich starre längliche Bauelemente. Die Halterung kann also insbesondere auch nach Art einer Kette aufgebaut sein, deren Gelenke feststellbar sind.

Bei einer Weiterbildung des Erfindungsgegenstandes sind die Spannelemente zwischen den Stabelementen angeordnet und/oder die Halteorgane schwenkbar an den Spannelementen befestigt (Ansprüche 2 und 3). Vorzugsweise steht zumindest ein Teil der Spannelemente über eine Höhenverstellung, die an einem starren Träger befestigt ist, mit dem Tragelement in Verbindung (Anspruch 4); auf diese Weise ist es möglich, auch die Spannelemente, über welche die Halterung an dem Tragelement befestigt ist, hinsichtlich ihrer Lage der Form des zu handhabenden Gegenstands anzupassen.

Die Höhenverstellung läßt sich in einfacher Weise dadurch verwirklichen, daß die betreffenden Spannelemente über beiderseits gelenkig angeschlossene Zylinderaggregate an dem starren Träger befestigt sind.

Im Rahmen der Erfindung kann die Höhenverstellung jedoch auch aus mit feststellbaren Gelenken ausgestatteten Gelenkstangen bestehen, die an dem starren Träger befestigt sind (Anspruch 5). Jedes Spannelement kann dabei insbesondere unter Zwischenschaltung zweier gegeneinander beweglicher Gelenkstangen mit dem Träger bzw. mit dem Tragelement in Verbindung stehen.

Bei einer bevorzugten Ausführungsform des Erfindungsgegenstandes sind die Stabelemente über Knotenelemente mit feststellbaren Gelenken aneinander befestigt (Anspruch 6); die Anordnung der Stabelemente kann dabei wiederum derart sein, daß sie gemeinsam eine Linie oder ein flaches Gitterwerk bilden.

Die in Rede stehende Ausführungsform kann dadurch weiter ausgestaltet sein, daß die Stabelemente über Kugelköpfe allseits beweglich in den Knotenelementen gehalten sind; diese weisen fernbetätigbare Klemmorgane auf, über welche die Kugelköpfe festhaltbar sind (Anspruch 7).

Die Erfindung wird nachfolgend anhand mehrerer schematisch in der Zeichnung dargestellter Ausführungsbeispiele im einzelnen erläutert.

Es zeigen:

| | |
|---|---|
| Fig. 1a-c | den grundsätzlichen Aufbau und die Wirkungsweise des Erfindungsgegenstandes bei unterschiedlichen Arbeitsverhältnissen, |
| Fig. 2a, b | eine Draufsicht bzw. Seitenansicht einer Halterung mit Stabelementen, die über Knotenelemente mit feststellbaren Gelenken aneinander befestigt sind, |
| Fig. 2c, d | in gegenüber Fig. 2a, b verändertem Maßstab als Einzelheit eine Draufsicht eines Knotenelements bzw. einen Schnitt nach Linie II-II in Fig. 2c, |
| Fig. 3 | eine Seitenansicht einer Halterung gemäß Fig. 2, deren Knotenelemente zum Teil über Gelenkstangen mit feststellbaren Gelenken bezüglich eines starren Trägers höhenverstellbar gehalten sind, und |
| Fig. 4 | eine Seitenansicht einer Halterung gemäß Fig. 2, deren Knotenelemente zum Teil über Zylinderaggregate bezüglich eines starren Trägers höhenverstellbar gehalten sind. |

Der in Fig. 1a bis c dargestellte Erfindungsgegenstand weist folgende Hauptbestandteile auf:

ein Tragelement 1 bestehend aus einer Konsole 1a und drei gelenkig mit dieser bzw. miteinander verbundenen Betätigungsarmen 1b bis 1d, eine formveränderliche, am Betätigungsarm 1d angebrachte Halterung 2 und vier gelenkig an dieser befestigte, als Vakuumgreifer ausgebildete Halteorgane 5.

Die Halterung 2 - zusammengesetzt aus fünf Stabelementen 3 und vier diese beweglich miteinander verbindenden Spannelementen 4 - ist in der Weise ausgebildet, daß sie wechselweise in einen Entspannungszustand mit niedrigem Formänderungswiderstand und in einen Verspannungszustand überführbar ist, in dem die von den Bestandteilen 3 und 4 gebildete Linie formbeständig ist, d.h. einen für die zu erwartende Beanspruchung ausreichenden Formänderungswiderstand aufweist. Die Aussteifung dieser Linie wird dadurch herbeigeführt, daß die Stabelemente 3 durch Blockieren der zwischen ihnen angeordneten Spannelemente 4 gegeneinander festgesetzt werden.

Die im Entspannungszustand mit geringem Kraftaufwand verformbare Halterung 2 paßt sich dem Verlauf eines zu handhabenden, biegeschlaffen Gegenstands 6 (beispielsweise eines Fasermattenstreifens) dadurch an, daß die Halterung über die Vakuumgreifer 5 auf den Gegenstand 6 aufgesetzt wird; dieser ruht seinerseits auf einer ebenen Aufnahmeoberfläche 7 (Fig. 1a).

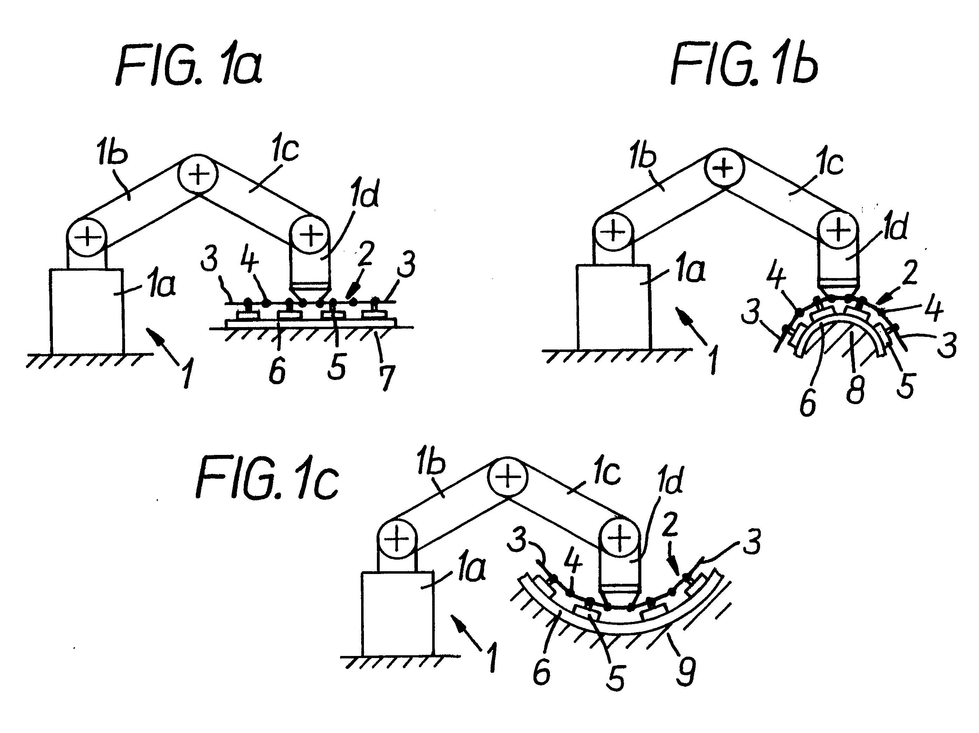

Nach dem Überführen der Halterung 2 in den ausgesteiften Verspannungszustand und dem Inbetriebsetzen der Vakuumgreifer 5 läßt sich der Gegenstand 6 durch Betätigen des Tragelements 1 aufnehmen und in den Bereich einer konvex gekrümmten Ablegeoberfläche 8 transportieren (Fig. 1b). Nach ausreichender Annäherung an diese wird die Halterung 2 durch Aufheben der Blockierung der Spannelemente 4 in den Entspannungszustand versetzt, so daß sich der Gegenstand 6 - ebenso wie die Halterung 2 unter Einwirkung der Schwerkraft - dem Verlauf der Ablegeoberfläche 8 anpassen und den Gegenstand 6 gezielt auf dieser freisetzen kann.

Ausgehend von der in Fig. 1a dargestellten Ausgangssituation kann der Erfindungsgegenstand auch dazu benutzt werden, den zunächst ebenen Gegenstand 6 nach erneutem Überführen in den Entspannungszustand auf einer konkav gekrümmten Ablegeoberfläche 9 freizusetzen (Fig. 1c).

Selbstverständlich kann der Handhabungsvorgang auch in umgekehrter Richtung ablaufen, wobei die in Fig. 1b bzw. 1c dargestellte Oberfläche 8 bzw. 9 die Aufnahmeoberfläche und die Oberfläche 7 der Fig. 1a die Ablegeoberfläche bildet.

Weiterhin ist der Erfindungsgegenstand auch in der Weise einsetzbar, daß er den nachgiebigen Gegenstand 6 von einer der beiden Oberflächen 8 und 9 aufnimmt und auf der jeweils anderen Oberfläche ablegt (Fig. 1b und 1c).

Ganz allgemein läßt sich der Erfindungsgegenstand über die aussteifbare Halterung 2 in weitem Umfang an den durch eine Aufnahme- oder Ablegeoberfläche vorgegebenen Verlauf eines zu handhabenden Gegenstands anpassen. Im Rahmen der Erfindung kann die Halterung auch so ausgebildet sein, daß die jeweils über Spannelemente 4 beweglich/feststellbar miteinander verbundenen Stabelemente 3 ein flaches Gitterwerk bilden; dieses weist quer zur Zeichenebene zumindest eine weitere Reihe Stabelemente 3 und Spannelemente 4 sowie zwischen den Reihen quer zur Zeichenebene liegende Stabelemente auf. Eine derartige Ausführungsform ermöglicht es, Gegenstände mit größerer Breite (quer zur Zeichenebene) aufzunehmen und abzulegen, und zwar unabhängig von der Oberflächenform.

Die zuletzt beschriebene, flächenförmige Ausbildung der Halterung gestattet es auch, Gegenstände mit mehrfach gekrümmter Oberflächenform (also auch mit einer Krümmung senkrecht zur Zeichenebene) zu handhaben.

In dem dargestellten Ausführungsbeispiel (Fig. 1a - c) ist die formveränderliche Halterung 2 über das mittlere Stabelement 3 an dem Betätigungsarm 1d befestigt.

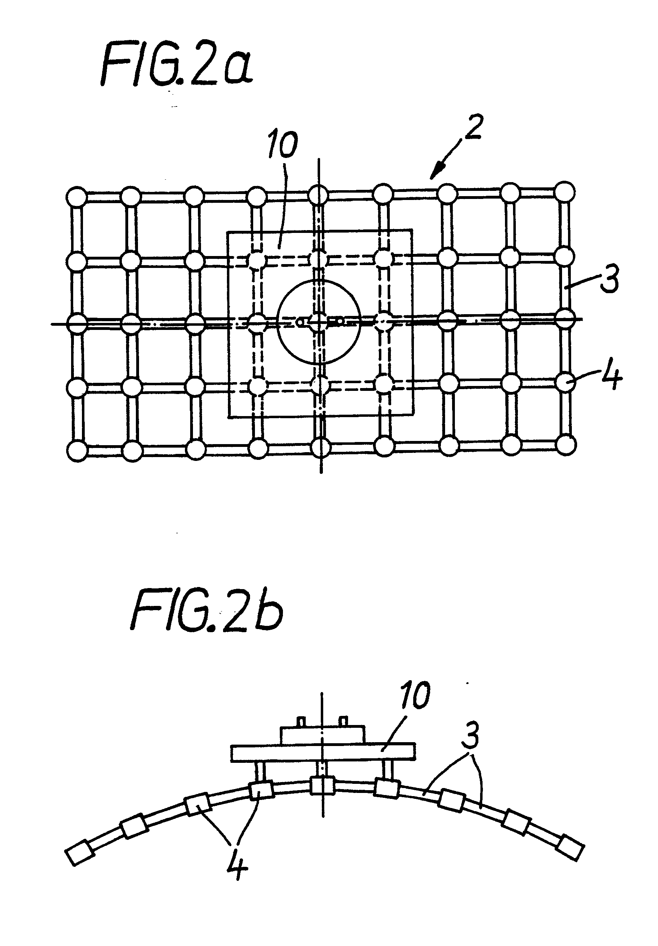

Bei der Ausführungsform gemäß Fig. 2a bis d sind die Stabelemente 3 über Spannelemente in Gestalt von Knotenelementen 4 mit feststellbaren Gelenken aneinander befestigt und bilden ein flaches Gitterwerk. Dieses ist im Mittelbereich (vergl. Fig 2a, b) mit einem plattenförmigen Träger 10 versehen, über welche es beispielsweise an dem Betätigungsarm 1d (vergl. dazu Fig. 1a) befestigt werden kann. Fig. 2b zeigt das aus den Teilen 3 und 4 bestehende Gitterwerk nach Anpassung an eine konvex gewölbte Oberfläche in ausgesteiftem Verspannungszustand; auf die Darstellung der zugehörigen Halteorgane, die unterhalb der Knotenelemente 4 gelenkig an diesen angebracht sind, ist verzichtet worden.

Die Knotenelemente 4 weisen folgende Hauptbestandteile auf:

eine Grundplatte 4a mit vorspringender Nabe 4b und darin angeordneter Mittelbohrung 4c, eine an der Nabe geführte Klemmscheibe 4d und oberhalb derselben einen in einem Gehäuse 4e beweglichen Klemmkolben 4f, unter dessen Einwirkung die Klemmscheibe 4d in Richtung auf die Grundplatte 4a verschoben werden kann. Das Gehäuse 4e ist unbeweglich mit dem obenliegenden Endabschnitt der Nabe 4b verbunden.

Über die Mittelbohrung 4c können die nicht dargestellten Halteorgane, beispielsweise Vakuumgreifer (vergl. dazu Fig. 1a bis c), an den Knotenelementen 4 angebracht werden.

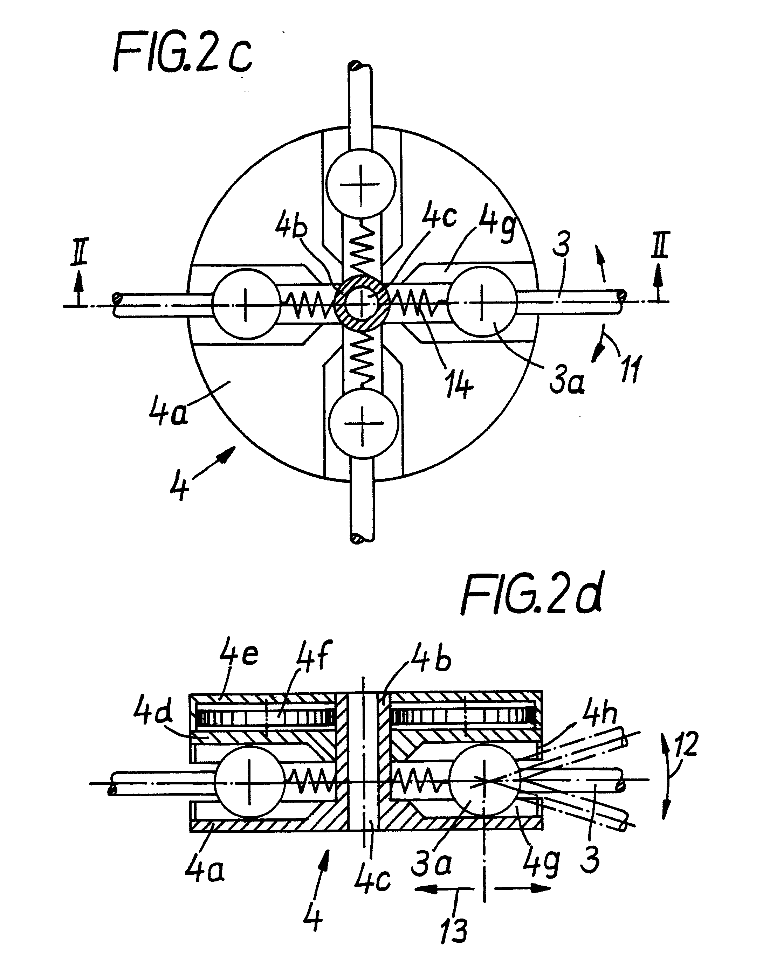

Die Teile 4a und 4d begrenzen miteinander Radialbohrungen 4g, in denen jeweils ein Stabelement 3 über einen Kugelkopf 3a allseits beweglich (Doppelpfeile 11 bis 13 in Fig 2c bzw. 2d) geführt ist. Der Kugelkopf 3a stützt sich dabei über ein Federelement 14 nachgiebig an der Nabe 4b ab. Die Radialbohrungen 4g sind in der Nähe Ihres Austrittsquerschnitts 4h mit einer nicht dargestellten Einrichtung (beispielsweise einem an der Grundplatte 4a befestigten Anschlag) versehen, die den Austritt der Kugelköpfe 3a aus der Radialbohrung 4g verhindert.

Solange die Klemmkolben 4f der Knotenelemente 4 nicht druckbeaufschlagt sind, befindet sich das aus den Teilen 3 und 4 gebildete flache Gitterwerk in der Entspannungsstellung, in welcher mit geringem Kraftaufwand eine Anpassung an den Verlauf einer vorgegebenen Oberfläche vorgenommen werden kann. Mit der Druckbeaufschlagung der Klemmkolben 4f wird das Gitterwerk in den Verspannungszustand überführt. Dabei werden die Stabelemente 3 über die gegen ihre Kugelköpfe 3a gepreßten Klemmscheiben 4d in der zuvor eingenommenen Lage festgehalten; dementsprechend behält auch das Gitterwerk seine angepaßte Form bei. Der Vorteil der in Rede stehenden Ausführungsform besteht insbesondere darin, daß sie durch Zu- bzw. Abschalten einer Druckquelle fernbetätigt in den Verspannungs- bzw. Entspannungszustand versetzt werden kann.

Soweit eine flächenhafte Anordnung der zugehörigen Halteorgane nicht erforderlich ist, kann auch eine Ausführungsform zur Anwendung kommen, bei welcher die Stabelemente 3 und Knotenelemente 4 lediglich als durchgehende Linie ausgebildet sind (vergl. dazu Fig. 1a bis c).

Damit sich auch die Stabelemente 3 im Mittelbereich der Halterung 2 - d.h. in dem Bereich, über den die Halterung mit dem Tragelement 1 (Betätigungsarm 1d beispielsweise in Fig. 1a) in Verbindung steht - hinsichtlich ihrer Lage an die Oberflächenform des zu handhabenden Gegenstands anpassen können, stehen die Spannelemente bzw. Knotenelemente 4 über eine Höhenverstellung, die an dem starren Träger 10 befestigt ist, mit dem Tragelement (Betätigungsarm 1d beispielsweise in Fig. 1a) in Verbindung.

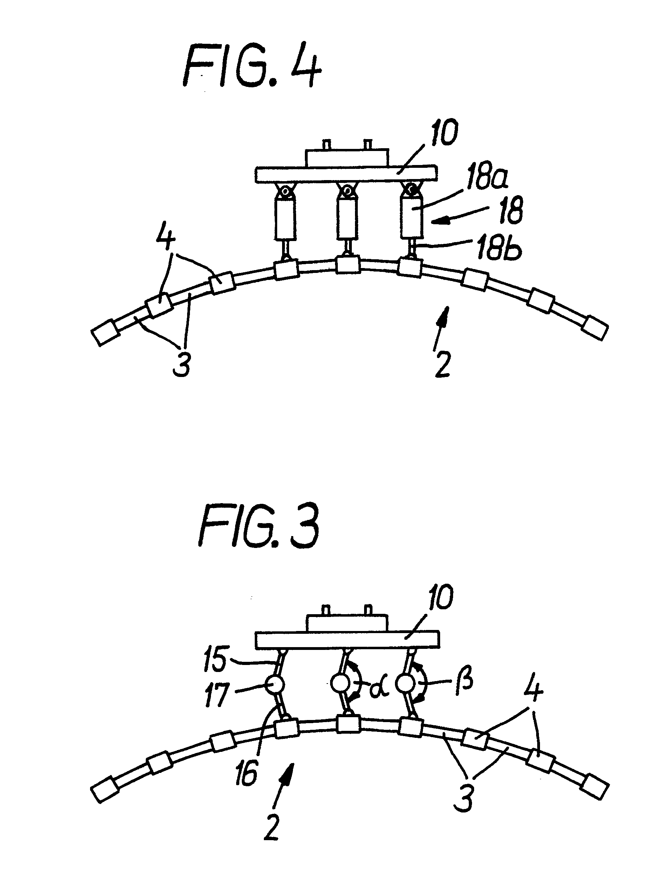

Bei der Ausführungsform gemäß Fig. 3 besteht die Höhenverstellung aus paarweise zusammenwirkenden Gelenkstangen 15 und 16, die jeweils über feststellbare Gelenke 17 aneinander befestigt und an den Träger 10 bzw. an das zugehörige Spannelement/ Knotenelement 4 angelenkt sind. Nach dem Blockieren der Gelenke 17 behalten die zugehörigen Gelenkstangen 15 und 16 ihre zuvor eingenommene Lage zueinander bei.

Bedingt durch die Krümmung der in Fig. 3 dargestellten Halterung 2 bedeutet dies, daß die in der Mitte des Trägers 10 liegenden Gelenkstangen 15 und 16 stärker gegeneinander versetzt sind als die daneben liegenden Gelenkstangen-Paare: der von den mittleren Gelenkstangen 15, 16 eingeschlossene Winkel ∝ ist also kleiner als der von den seitlichen Gelenkstangen-Paaren eingeschlossene Winkel β.

Die festellbaren Gelenke 17 können ebenso ausgebildet sein wie die zuvor beschriebenen Spannelemente/ Knotenelemente 4 mit der Maßgabe, daß sie parallel zur Zeichenebene angeordnet liegen. Der Vorteil dieser Ausführungsform besteht somit darin, daß die Höhenverstellung unter Rückgriff auf die Bestandteile verwirklicht werden kann, aus denen auch die Halterung 2 zusammengesetzt ist.

Bei der Ausführungsform gemäß Fig. 4 wird die Höhenverstellung für die Spannelemente/Knotenelemente 4 im Mittelbereich der Halterung 2 von Zylinderaggregaten 18 gebildet, deren Zylindergehäuse 18a an den Träger 10 und deren Kolbenstangen 18b an die zugehörigen Teile 4 angelenkt sind.

Durch Ein- bzw. Ausfahren und nachfolgendes Festhalten der Kolbenstangen 18b lassen sich die schwenkbar mit diesen verbundenen Teile 4 der Oberflächenform des zu handhabenden Gegenstandes (vergl. dazu Fig. 1a bis c) ihrer Lage nach anpassen.

Die in Fig. 3 und 4 dargestellte Höhenverstellung kann selbstverständlich auch dann zur Anwendung kommen, wenn die Halterung 2 (wie in Fig. 2a dargestellt) als Gitterwerk ausgebildet ist. Bei einer derartigen Ausführungsform sind jeweils mehrere Gelenkstangen-Paare 15, 16 nebst Gelenken 17 bzw. mehrere Zylinderaggregate 18 quer zur Zeichenebene mit Abstand nebeneinander angeordnet.

**Ansprüche**

1. Einrichtung zur Handhabung insbesondere von Gegenständen aus nachgiebigen Werkstoffen, mit Halteorganen, insbesondere Greifern, die an einer formveränderlichen Halterung mittels eines Tragelements bewegbar sind, wobei die die Halterung wechselweise in einen Entspannungszustand mit niedrigem Formänderungswiderstand und in einen Verspannungszustand versetzbar ist, in dem sie - bedingt durch eine Blockierung ihrer Bestandteile - formbeständig ist, **dadurch gekennzeichnet,** daß die Halterung (2) beweglich miteinander in Verbindung stehende Stabelemente (3) aufweist, die über an ihnen angreifende Spannelemente (4) gegeneinander feststellbar und zumindest linienhaft angeordnet sind.

2. Einrichtung nach Anspruch 1, dadurch gekennzeichnet, daß die Spannelemente (4) zwischen den Stabelementen (3) angeordnet sind.

3. Einrichtung nach zumindest einem der Ansprüche 1 bis 2, dadurch gekennzeichnet, daß die Halteorgane (5) schwenkbar an den Spannelementen (4) befestigt sind.

4. Einrichtung nach zumindest einem der Ansprüche 1 bis 3, dadurch gekennzeichnet, daß zumindest ein Teil der Spannelemente (4) über eine Höhenverstellung, die an einem starren Träger (10) befestigt ist, mit dem Tragelement (1) in Verbindung steht.

5. Einrichtung nach Anspruch 4, dadurch gekennzeichnet, daß die Höhenverstellung aus mit feststellbaren Gelenken (17) ausgestatteten Gelenkstangen (15, 16) besteht, die an dem starren Träger (10) befestigt sind.

6. Einrichtung nach zumindest einem der Ansprüche 1 bis 5, dadurch gekennzeichnet, daß die Stabelemente (3) über Knotenelemente (4) mit feststellbaren Gelenken aneinander befestigt sind.

7. Einrichtung nach Anspruch 6, dadurch gekennzeichnet, daß die Stabelemente (3) über Kugelköpfe (3a) allseits beweglich in den Knotenelementen (4) gehalten sind und daß diese fernbetätigbare Klemmorgane (4f) aufweisen, über welche die Kugelköpfe festhaltbar sind.

FIG. 1a

FIG.1b

FIG.1c

7

FIG.2a

FIG.2b

# FIG.2 c

# FIG.2 d

# FIG. 4

# FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4047709 (THYBERG) <br> * Zusammenfassung * <br> --- | 1-3, 5 | B25J15/00 <br> B25J19/00 |
| Y | GB-A-2175877 (CHAMBERS) <br> * Seite 2, Zeilen 57 - 109 * <br> --- | 1-3, 5 | |
| A | US-A-4088312 (FROSCH) <br> * Zusammenfassung * <br> --- | 1, 4 | |
| A | EP-A-0129853 (HITACHI) <br> * Ansprüche 1, 4, 7, 8 * <br> --- | 1 | |
| A | IBM TECHNICAL DISCLOSURE BULLETIN. <br> vol. 29, no. 11, April 1987, NEW YORK US <br> Seiten 4740 - 4741; <br> "PADDED ROBOT FINGERS" <br> * das ganze Dokument * <br> --- | 1 | |
| A | DE-U-8813521 (FESTO) <br> * Ansprüche 1, 8 * <br> --- | 1 | |
| A | DE-A-3629968 (MESSERSCHMITT-BOLKOW-BLOHM) <br> * Ansprüche 1, 2, 5 * <br> --- | 1, 5 | **RECHERCHIERTE SACHGEBIETE (Int. Cl.5)** <br><br> B25J |
| A | US-A-4625836 (PIGOTT) <br> * Zusammenfassung * <br> --- | 6 | |
| A | US-A-3165899 (SHATTO) <br> * Spalte 5, Zeile 61 - Spalte 6, Zeile 7 * <br> ----- | 7 | |

Der vorliegende Recherchenbericht wurde für alle Patentansprüche erstellt

| Recherchenort | Abschlußdatum der Recherche | Prüfer |
|---|---|---|
| DEN HAAG | 06 MAERZ 1991 | LAMMINEUR P.C.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes Dokument